# EUROPÄISCHE PATENTSCHRIFT

(11) **EP 3 138 678 B1**
(45) Veröffentlichungstag und Bekanntmachung des Hinweises auf die Patenterteilung: **15.11.2017**
(21) Anmeldenummer: 15183307.6
(22) Anmeldetag: 01.09.2015
(51) Int. Cl.: B29C 31/04, B29C 33/00, B29C 39/02, B29C 45/46

(54) **VERFAHREN, DOSIERVORRICHTUNG UND SYSTEM ZUM FÜLLEN EINER FORM MIT ZUMINDEST ZWEI PASTÖSEN MASSEN**
MEHTOD, METERINGDEVICE AND SYSTEM FOR FILLING A MOLD WITH AT LEAST TWO PASTY MASSES
PRODÉDÉ, DOSEUR ET SYSTÈME DE REMPLIR UN MOULE AVEC MOINS DEUX COMPOSANTS PATEUX

(43) Veröffentlichungstag der Anmeldung: 08.03.2017
(73) Patentinhaber: Weckerle GmbH, 82362 Weilheim (DE)
(72) Erfinder: Jäger, Joachim, 82436 Eglfing (DE); Droste, Sven, 82380 Peißenberg (DE)
(74) Vertreter: Hohgardt, Martin

(56) Entgegenhaltungen:
- EP-A1- 2 006 063
- WO-A1-2014/079980
- US-A- 4 602 886
- US-A1- 2012 009 135

## Beschreibung

Die Erfindung betrifft im Allgemeinen ein Verfahren, eine Vorrichtung und ein System zum Befüllen einer Form mit zumindest zwei pastösen Massen und insbesondere ein Verfahren, eine Vorrichtung und ein System zum Befüllen einer Form zum Erzeugen einer Lippenstiftmine aus zumindest zwei pastösen Massen.

Bei bekannten Verfahren zum Formen von pastösen Massen, beispielsweise zur Herstellung von Lippenstiftminen, wird die eine zu formende pastöse Masse mit Hilfe einer Befüllstation im heißen und flüssigen Zustand in einzelne Formen gefüllt. Die eingefüllte Masse wird dann mit Hilfe einer Kühlstation in den Formen abgekühlt und nach dem Abkühlvorgang mit Hilfe einer Entformstation im festen Zustand aus den Formen entnommen.

Soll die Lippenstiftmine hingegen nicht nur aus einer einzelnen zu formenden pastösen Masse bestehen, sondern aus mehreren, so ist mit den bekannten Verfahren nur eine Schichtung unterschiedlicher pastöser Massen möglich. Beispielsweise beschreibt US 4,602,886 eine derartige Schichtung unterschiedlicher pastöser Massen, wobei zunächst eine erste pastöse Masse in die Form gefüllt wird und anschließend eine weitere pastöse Masse und so weiter bis die Form aufgefüllt ist.

Zumeist werden aber aufwendigere Ausgestaltungen gewünscht, bei dem die pastösen Massen eben nicht nur geschichtet sind, sondern Muster ergeben. Dies wird nicht nur aus ästhetischen Gründen gewünscht, sondern auch um eine bessere Verteilung bei unterschiedlichen pastösen Massen bei Verwendung des Lippenstifts zu gewährleisten. Bei einer Schichtung von unterschiedlichen pastösen Masse würde ansonsten bei Gebrauch des Lippenstiftes zunächst die pastöse Masse verbraucht werden, die die oberste Schicht bildet und anschließend würden nacheinander die pastösen Massen verbraucht werden, die die weiteren Schichten bilden.

In DE 10 2005 037 451 A1 wird ein Verfahren und eine Vorrichtung beschrieben, mit der mehrere pastöse Massen in eine Form gefüllt werden können und sich dabei ein spiralförmiges Muster ergibt. Dabei werden die unterschiedlichen pastösen Massen aus gesonderten Zuführleitungen in die Formen dosiert, wobei die Zuführleitungen während des Befüllens mit den Wandungen der Form in Kontakt stehen und in den Formen gedreht werden und gleichzeitig aus den Formen herausbewegt werden, so dass sich die unterschiedlichen pastösen Massen spiralförmig in der Form verteilen.

Mit den aus dem Stand der Technik bekannten Verfahren und Vorrichtungen können allerdings nur Lippenstiftminen mit sehr einfachen Ausgestaltungen für die unterschiedlichen pastösen Massen geformt werden. Grundsätzlich besteht allerdings ein Bedarf an Vorrichtungen und Verfahren mit denen Lippenstiftminen hergestellt werden können, bei denen die mindestens zwei pastösen Massen kompliziertere Ausgestaltungen beziehungsweise Strukturen bilden, die ein bestimmtes Muster ergeben. Die Aufgabe der vorliegenden Erfindung besteht deshalb in der Bereitstellung eines entsprechenden Verfahrens, einer entsprechenden Vorrichtung, und einem entsprechenden System.

Diese Aufgabe wird erfindungsgemäß durch die Gegenstände der unabhängigen Ansprüche gelöst. Weitere bevorzugte Ausführungsformen finden sich in den Unteransprüchen.

Ein erfindungsgemäßes Verfahren zum Befüllen einer Form mit zumindest zwei pastösen Massen, wobei die Form insbesondere angepasst ist zum Formen von Lippenstiftminen, weist auf Einbringen eines ersten Endbereichs einer Dosiervorrichtung in die Form, wobei der erste Endbereich zumindest eine Austrittsöffnung aufweist, Befüllen des ersten Endbereichs der Dosiervorrichtung mit einer ersten pastösen Masse, Erhöhen des Gasdruckes in dem ersten Endbereich der Dosiervorrichtung, wobei die erste pastöse Masse durch den Druck aus der Austrittsöffnung der Dosiervorrichtung herausgedrückt wird, Entfernen des ersten Endbereichs der Dosiervorrichtung aus der Form und anschließendes Auffüllen der Form mit einer zweiten pastösen Masse.

Die zwei eingesetzten pastösen Massen können sich dabei beispielsweise in chemischer Zusammensetzung, Farbe, Viskosität oder anderer Charakteristika unterscheiden. Es können sich dabei mehrere Charakteristika unterscheiden, es ist aber auch denkbar, dass sich nur ein Charakteristikum unterscheidet oder gar keins. Es können beispielsweise durch die Verwendung von zwei pastösen Massen mit zwei unterschiedlichen Farben ein erkennbares Muster in der Lippenstiftmine erzeugt werden.

Das Einbringen des ersten Endbereichs der Dosiervorrichtung in die Form kann derart geschehen, dass die Form relativ zur Dosiervorrichtung bewegt wird, die Dosiervorrichtung also an Ort und Stelle verbleibt und die Form sich in Richtung der Dosiervorrichtung bewegt. Im Gegensatz hierzu ist es aber auch möglich, dass sich die Dosiervorrichtung relativ zur Form bewegt, die Form also an Ort und Stelle verbleibt, sich aber die Dosiervorrichtung in Richtung der Form bewegt. Alternativ ist aber auch denkbar, dass sich die Form sowie die Dosiervorrichtung zueinander bewegen, also sich beide Teile relativ zueinander bewegen. Damit zumindest der erste Endbereich der Dosiervorrichtung in die Form eingebracht werden kann, und dies bevorzugt kontaktlos geschieht, ist der erste Endbereich der Dosiervorrichtung beispielsweise angepasst, einen kleineren Außendurchmesser zu haben, als der Innendurchmesser der Form.

Das Befüllen des ersten Endbereichs der Dosiervorrichtung kann beispielsweise derart geschehen, dass eine bereits dosierte, d.h. abgemessene Menge, der ersten pastösen Masse in die Dosiervorrichtung gefüllt wird, beispielsweise durch eine Gießfüllung. Es ist aber auch denkbar, dass die Dosiervorrichtung selbst angepasst ist die Menge an erster pastöser Masse zu dosieren, also abzumessen, und der Füllvorgang gestoppt wird, wenn die passende Menge an erster pastöser Masse abgefüllt, d.h. dosiert ist. Das erfindungsgemäße Verfahren kann also weiter aufweisen, Dosieren der in die Dosiervorrichtung zu füllenden ersten pastösen Masse entweder vor oder während des Befüllens der Dosiervorrichtung. Die Dosiervorrichtung kann dementsprechend eine doppelte Dosierfunktion übernehmen, zum einen kann die Dosiervorrichtung die in die Dosiervorrichtung zu füllende erste pastöse Masse abmessen, d.h. dosieren, und zum anderen kann die Dosiervorrichtung die in die Form aufzusprühende Menge an erster pastöser Masse dosieren. Dabei kann die Menge mit der die Dosiervorrichtung befüllt ist, der Menge entsprechend, die durch die Dosiervorrichtung in die Form gesprüht wird. Es ist aber auch denkbar, dass die Menge mit der die Dosiervorrichtung befüllt ist, größer ist als die Menge, die durch die Dosiervorrichtung in die Form gesprüht wird. Beispielsweise weil bei mehreren Sprühimpulsen immer nur ein Teil der befüllten Menge in die Form gesprüht wird, wobei nach allen Sprühimpulsen die abgefüllte Menge im Wesentlichen der Menge entspricht, die in die Form gesprüht wurde. Es ist aber auch denkbar, dass die Menge an erster pastöser Masse, die in die Dosiervorrichtung gefüllt wurde ausreicht, um Sprühimpulse in mehreren Formen auszuführen, in diesem Fall befindet sich in jeder Form nur ein Teil der in die Dosiervorrichtung gefüllten Menge.

Das Erhöhen des Gasdruckes in der Dosiervorrichtung beziehungsweise in dem ersten Endbereich der Dosiervorrichtung kann beispielsweise dadurch geschehen, dass ein zweiter Endbereich der Dosiervorrichtung nach dem Befüllen des ersten Endbereichs der Dosiervorrichtung an eine Gasdruckquelle angeschlossen wird, mit Hilfe derer sich der Gasdruck in der Dosiervorrichtung erhöhen lässt. Hierzu bildet die Dosiervorrichtung einen abgeschlossenen Raum aus, in der sich die Menge an befüllter erster pastöser Masse befindet. Wird in diesen Raum ein Gas eingeleitet, beispielsweise Luft, so erhöht sich der Gasdruck innerhalb dieses Raumes und auf die erste pastöse Masse wird eine Kraft ausgeübt. Übersteigt diese Kraft die Oberflächenspannung der pastösen Masse, die diese nicht aus der zumindest einen Austrittsöffnung austreten lässt, so wird die erste pastöse Masse aus der zumindest einen Austrittsöffnung herausgedrückt, d.h. gesprüht, wodurch sich Tropfen bilden, die auf die Innenwand der Form auftreffen und dort erstarren und eine Struktur bilden. Eine Vielzahl von Tropfen bilden dann entsprechend ein Muster aus. Das Sprühverhalten kann dabei durch die Dauer und die Stärke des Gasdruckes gesteuert werden. Es kann auch gesagt werden, dass in der Dosiervorrichtung ein Gasdruckimpuls ausgeübt wird, der die erste pastöse Masse aus der zumindest einen Austrittsöffnung herausdrückt. Dieser Gasdruckimpuls kann durch eine Gasdruckquelle erzeugt werden, beispielsweise durch eine Gasquelle, in der ein Gas unter Druck gehalten wird und bei Anschluss an die Dosiervorrichtung kann dieses Gas impulsartig expandieren. Es ist aber auch denkbar, dass die Dosiervorrichtung an einen Kompressor angeschlossen wird, der Gas unter Druck in die Dosiervorrichtung einleitet. Es ist auch denkbar, dass sich im zweiten Endbereich der Dosiervorrichtung ein Kolben befindet, der durch seine Bewegung in Richtung des ersten Endbereichs das Gas zwischen dem Kolben und der pastösen Masse komprimiert, wodurch der Gasdruck erhöht wird und die pastöse Masse aus der zumindest einen Austrittsöffnung herausgedrückt wird. Dem Fachmann sind aber auch noch andere Möglichkeiten bekannt, wie in einem abgeschlossenen Raum der Gasdruck erhöht werden kann.

Nach dem Aufsprühen der ersten pastösen Masse kann die Form mit einer zweiten pastösen Masse aufgefüllt werden. Dieses Auffüllen kann beispielsweise durch eine Gießfüllung geschehen. Es ist auch denkbar, das eine weitere Dosiervorrichtung in die Form eingebracht wird, nachdem die erste Dosiervorrichtung aus der Form entfernt wurde, und diese dazu angepasst ist die Form mit der zweiten pastösen Masse aufzufüllen. Dem Fachmann sind eine Vielzahl von Füllmechanismen bekannt, um eine Form mit einer pastösen Masse aufzufüllen. Alle diese Füllmechanismen sollen von der Erfindung umfasst sein.

Das Aufbringen der ersten pastösen Masse durch das Herausdrücken einer pastösen Masse mit Hilfe einer Erhöhung des Gasdruckes kann auch als Sprühvorgang bezeichnet werden. Dementsprechend kann die Dosiervorrichtung auch als Sprühvorrichtung bezeichnet werden. Ein Sprühvorgang hat dabei gegenüber dem bekannten Gießfüllen einer Form den Vorteil, dass unterschiedliche Strukturen erzeugt werden können, die unterschiedliche Muster ergeben. Der Sprühvorgang erlaubt dementsprechend ein höheres Maß an Gestaltungsfreiheit als dies durch eine Gießfüllung möglich ist. Das Sprühverhalten der Sprühvorrichtung ist dabei unter anderem abhängig von der Viskosität der ersten pastösen Masse und dem eingesetzten Gasdruck. Über diese Faktoren lässt sich die Tropfengröße einstellen die von der Sprühvorrichtung erzeugt wird. Je kleiner die Tropfengröße ist, desto stärker ist die Verneblung der ersten pastösen Masse, zum Beispiel kann eine starke Vernebelung eingesetzt werden, um Glittereffekte in der Form aufzubringen. Je größer die Tropfengröße ist, desto schwächer ist die Verneblung und es werden Strukturen mit klarer Kontierung auf die Innenwand der Form aufgebracht beziehungsweise gesprüht. Das Muster der sich dabei ergebenen Struktur kann dabei einerseits durch das Sprühverhalten beeinflusst werden sowie durch ein Bewegen der Sprühvorrichtung innerhalb der Form. Des Weiteren ist denkbar, dass die Sprühvorrichtung nicht nur eine Austrittsöffnung aufweist, sondern eine Vielzahl von Austrittsöffnungen, wobei die Anordnung der Austrittsöffnungen das auszusprühende Muster vorgibt. In diesem Fall stellt die Anordnung der Austrittsöffnungen eine Art Schablone für das aufzubringende Muster dar.

Mit dem erfindungsgemäßen Verfahren ist es erstmalig möglich, auch Lippenstiftminen mit komplexen Mustern aus zumindest zwei pastösen Massen herzustellen.

Dem Fachmann ist dabei bewusst, dass auch wenn das hier beschriebene Verfahren mit nur zwei pastösen Massen durchgeführt wird, die Sprühvorrichtung auch mehrmals mit unterschiedlichen pastösen Massen befüllt werden kann und diese unterschiedlichen pastösen Massen auf die Innenwand der Form aufgesprüht werden können, bevor die Form anschließend mit der finalen pastösen Masse aufgefüllt wird. Auch ist denkbar, dass vor dem Auffüllen der Form mit der zweiten pastösen Masse mehrere Sprühvorrichtungen nacheinander in die Form eingebracht werden, die unterschiedliche pastöse Massen aufsprühen und/oder unterschiedliche Strukturen aufsprühen, wodurch sich das endgültige Muster ergibt. Des Weiteren ist dem Fachmann bewusst, dass auch wenn das hier beschriebene Verfahren nur von einer Sprühvorrichtung beziehungsweise Dosiervorrichtung und einer Form spricht, das Verfahren auch gleichzeitig von mehreren Sprühvorrichtungen beziehungsweise Dosiervorrichtungen und Formen durchgeführt werden kann, um eine Vielzahl von Lippenstiftminen gleichzeitig zu erzeugen.

In einer bevorzugten Ausführungsform des erfindungsgemäßen Verfahrens wird die Form vor und/oder während des Einbringens des ersten Endbereichs der Dosiervorrichtung aufgeheizt. Dieses Aufheizen sorgt dafür, dass die in den pastösen Massen enthaltenen Komponenten, bei Lippenstiften zum Beispiel Wachse, beim Auftreffen auf die Innenwand der Form nicht unkontrolliert erstarren und sich hierdurch Schleier bilden. Des Weiteren ist die Anhaftung der ersten pastösen Masse an einer warmen Form besser als an einer kalten Form, d.h. die durch die Dosiervorrichtung aufgesprühte erste pastöse Masse verharrt bei einer aufgeheizten Form besser an der Aufsprühposition als bei einer kalten Form. D.h. die aufgesprühten Strukturen verlaufen nicht und das Muster bleibt scharf und konturiert. Des Weiteren hat das Aufheizen den Vorteil, dass die zweite pastöse Masse sich leichter in der Form verteilt und die aufgesprühten Strukturen besser umschließt. Das Aufheizen kann durch Einbringen der Form in ein entsprechendes Wärmebad geschehen, oder die Form kann von einem Wärmeträgermedium umspült werden. Dem Fachmann ist aber bewusst, dass je nach Material aus dem die Formen geformt sind, unterschiedliche Aufheizverfahren verwendet werden können. Beispielsweise kann bei einer Form aus Metall, diese Form induktiv aufgeheizt werden, wobei bei einer Form aus einem Elastomer Material ein Wärmetransfermedium vorhanden sein muss, welches die Form aufheizt. Dieses Wärmetransfermedium kann gasförmig aber auch flüssig sein und kann zur bestmöglichen Wärmeübertragung in direktem Kontakt mit der Form gebracht werden.

In einer weiteren bevorzugten Ausführungsform des erfindungsgemäßen Verfahrens wird die pastöse Masse vor und/oder während des Befüllens des ersten Endbereichs der Dosiervorrichtung aufgeheizt. Dieses Aufheizen kann entweder vor dem Befüllen durch eine Wärmestation geschehen und/oder die Dosiervorrichtung selbst kann Mittel zum Aufheizen aufweisen. Es ist auch denkbar, dass die Dosiervorrichtung vor dem Befüllen mit der ersten pastösen Masse aufgeheizt wird. Das Aufheizen der pastösen Masse hat zum einen den Zweck, dass die pastöse Masse in einen gießfähigen Zustand überführt wird und weist zum anderen den Vorteil auf, dass die Viskosität der ersten pastösen Masse regelbar ist. Die Viskosität der ersten pastösen Masse muss dabei derart geregelt werden, dass diese nicht selbstständig aus der zumindest einen Austrittsöffnung austritt, muss es aber erlauben, die pastöse Masse durch Erhöhung des Gasdruckes aus der Austrittsöffnung herauszudrücken.

In einer weiteren bevorzugten Ausführungsform des erfindungsgemäßen Verfahrens geschieht das Einbringen des ersten Endbereichs der Dosiervorrichtung in die Form kontaktlos. Der erste Endbereich der Dosiervorrichtung ist also in Geometrie und Abmessung angepasst zumindest teilweise in die Form eingebracht zu werden. Hierzu ist der Außendurchmesser des ersten Endbereichs der Dosiervorrichtung, oder zumindest des in die Form einzubringenden Teils des ersten Endbereichs der Dosiervorrichtung, kleiner als der Innendurchmesser der Form. Das sich ergebende Spaltmaß zwischen der Außenfläche des ersten Endbereichs und der Dosiervorrichtung bestimmt auch die Größe der aufgesprühten Struktur. Die erste pastöse Masse tritt an der zumindest einen Austrittsöffnung innerhalb eines sogenannten Sprühkegels aus. Je größer das Spaltmaß, desto größer der Durchmesser des Sprühkegels an der Auftreffstelle auf der Innenwand der Form, d.h. je größer das Spaltmaß, desto größer die aufgesprühte Struktur. Durch das Spaltmaß lässt sich also auch die zu erzeugende Struktur beeinflussen und damit sich das zu erzeugende Muster beeinflussen.

In einer weiteren bevorzugten Ausführungsform des erfindungsgemäßen Verfahrens wird die Dosiervorrichtung oder zumindest der erste Endbereich der Dosiervorrichtung in der Form während der Erhöhung des Gasdruckes bewegt. Durch dieses Bewegen der Dosiervorrichtung innerhalb der Form, d.h. durch Verändern der Position der zumindest einen Austrittsöffnung relativ zur Innenwand der Form, lässt sich auf die Innenwand ein Muster aufsprühen. Zum Beispiel kann die Dosiervorrichtung gedreht werden, wobei die zumindest eine Austrittsöffnung in gleicher Höhe verbleibt, wodurch eine horizontale Linienstruktur erzeugt werden kann. Die Dosiervorrichtung kann aber auch weiter in die Form beziehungsweise aus der Form heraus bewegt werden, um eine vertikale Linienstruktur zu erzeugen. Dem Fachmann ist bewusst, dass die Dosiervorrichtung beliebig innerhalb der Form bewegt werden kann, um verschiedene Strukturen zu erzeugen und damit verschiedene Muster zu erzeugen. Beispielsweise kann auch der Abstand zur Innenwand durch die Bewegung variiert werden, um so den Sprühkegel zu variieren. Es können auch mehrere der genannten Bewegungen gleichzeitig ausgeführt werden. Dem Fachmann ist auch bewusst, dass die beschriebenen Strukturen nicht nur durch bewegen der Dosiervorrichtung, sondern auch durch bewegen der Form erzeugt werden können. Diese Bewegungen können computergesteuert sein, so dass sich bei jeder Lippenstiftmine das gleiche Muster ergibt.

In einer weiteren bevorzugten Ausführungsform des erfindungsgemäßen Verfahrens wird die mit der zweiten pastösen Masse aufgefüllte Form nach dem Auffüllen abgekühlt, so dass die Masse erstarren kann und durch eine Entformstation kann dann die fertige Lippenstiftmine aus der Form entnommen werden.

Die obige Aufgabe wird auch durch eine Dosiervorrichtung zum Befüllen einer Form, insbesondere einer Form zum Formen von Lippenstiftminen, mit einer pastösen Masse gelöst, wobei die Dosiervorrichtung einen ersten Endbereich mit zumindest einer Austrittsöffnung aufweist, wobei der erste Endbereich angepasst ist zumindest teilweise in die Form eingebracht zu werden und einen zweiten Endbereich mit einem Mittel zur selektiven Zuführung einer pastösen Masse und zum Erhöhen des Gasdruckes in dem ersten Endbereich der Dosiervorrichtung.

In einer bevorzugten Ausführungsform der erfindungsgemäßen Dosiervorrichtung weist der erste Endbereich eine Geometrie und einen Außendurchmesser auf, um in die Form eingebracht zu werden. D.h. der Außendurchmesser des ersten Endbereichs ist beispielsweise kleiner als der Innendurchmesser der Form, so dass der erste Endbereich kontaktlos eingebracht werden kann in die Form. Das sich ergebende Spaltmaß bestimmt dabei die Größe des Sprühkegels der aus der zumindest einen Austrittsöffnung herausgesprühten pastösen Masse und damit die sich ergebende Struktur auf der Innenwand der Form. Der erste Endbereich der Dosiervorrichtung kann dabei den gleichen oder zumindest einen ähnlichen Querschnitt wie die Form aufweisen, so dass ein kontaktloses Einbringen sichergestellt werden kann. Es ist aber auch denkbar, dass der erste Endbereich und die Form einen unterschiedlichen Querschnitt haben aber diese derart aufeinander abgestimmt sind, dass der erste Endbereich kontaktlos eingebracht werden kann.

In einer weiteren bevorzugten Ausführungsform der erfindungsgemäßen Dosiervorrichtung führt das Mittel zur selektiven Zuführung in einer ersten Stellung die pastöse Masse dem ersten Endbereich der Dosiervorrichtung zu und in einer zweiten Stellung wird der Gasdruck erhöht. Hierzu kann das Mittel zum selektiven Zuführen in einer ersten Stellung beispielsweise den ersten Endbereich der Dosiervorrichtung mit einer Zuführung für die pastöse Masse verbinden und in einer zweiten Stellung den ersten Endbereich der Dosiervorrichtung mit einer Gasdruckquelle verbinden. Beispielsweise kann das Mittel zum selektiven Zuführen ein Ventil sein. Dieses Ventil kann beispielsweise zwei Eingänge und einen Ausgang aufweisen und das Ventil kann dazu angepasst sein jeweils selektiv eine Verbindung zwischen dem ersten Eingang und dem Ausgang und zwischen dem zweiten Eingang und dem Ausgang herzustellen. Derartige Ventile werden häufig auch als 3/2-Ventile bezeichnet. Dabei kann der erste Eingang mit der Zuführung für die pastöse Masse verbunden sein, beispielsweise verbunden sein mit einem Behälter in der die pastöse Masse vorgehalten wird und der zweite Eingang kann mit einer Gasdruckquelle verbunden sein, beispielsweise mit einem Druckluftbehälter. Der Ausgang kann mit dem ersten Endbereich der Dosiervorrichtung verbunden sein. In einer ersten Stellung kann das Ventil eine Verbindung zwischen dem ersten Eingang und dem Ausgang herstellen, also eine Verbindung zwischen dem die pastöse Masse haltenden Behälter und dem ersten Endbereich der Dosiervorrichtung. Hierdurch kann eine gewisse Menge an pastöser Masse von dem Behälter in den ersten Endbereich der Dosiervorrichtung gefüllt werden. In dieser ersten Stellung ist der zweite Eingang verschlossen, es besteht also keine Verbindung zwischen dem zweiten Eingang und dem Ausgang. In der zweiten Stellung kann das Ventil eine Verbindung zwischen dem zweiten Eingang und dem Ausgang herstellen, also eine Verbindung zwischen der Gasdruckquelle, also beispielsweise dem Druckluftbehälter, und dem ersten Endbereich der Dosiervorrichtung. Hierdurch kann der Gasdruck in dem ersten Endbereich der Dosiervorrichtung erhöht werden. In dieser zweiten Stellung ist der erste Eingang verschlossen, es besteht also keine Verbindung zwischen dem ersten Eingang und dem Ausgang, so dass keine weitere pastöse Masse in den ersten Endbereich der Dosiervorrichtung gelangen kann. Erst wenn sich das Ventil wieder in der ersten Stellung befindet, so kann der erste Endbereich der Dosiervorrichtung erneut befüllt werden. Es ist dem Fachmann bewusst, dass auch wenn hier ein Ventil beschrieben worden ist für die selektive Zuführung der pastösen Masse und des Gasdruckes, auch andere Mittel verwendet werden können, die selektiv immer nur eine Verbindung zwischen der Zuführung der pastösen Masse und dem ersten Endbereich der Dosiervorrichtung beziehungsweise der Gasdruckquelle und dem ersten Endbereich der Dosiervorrichtung herstellen. Die Dauer für die die Verbindung jeweils hergestellt ist kann dabei die Menge der zugeführten pastösen Masse beziehungsweise die Dauer des Druckimpulses vorgeben.

In einer weiteren bevorzugten Ausführungsform der erfindungsgemäßen Dosiervorrichtung weist der erste Endbereich eine Vielzahl von Austrittsöffnungen auf. Dabei gibt beispielsweise die Anordnung der Vielzahl der Austrittsöffnungen das Muster vor, in der die Struktur aus pastöser Masse auf die Innenwand der Form gesprüht wird. Beispielsweise kann der erste Endbereich röhrenförmig ausgestaltet sein und entlang des röhrenförmigen Teils kann die Vielzahl von Austrittsöffnungen helixförmig angeordnet sein, so dass sich ein helixförmiges Muster an Strukturen ergibt, wenn die erste pastöse Masse auf die Innenwand der Form gesprüht ist. Dem Fachmann sind aber auch noch weitere Anordnungen der Vielzahl von Austrittsöffnungen bekannt, so dass beliebige Strukturen und damit Muster erzeugt werden können.

Die obige Aufgabe wird auch durch ein System zum Formen von zumindest zwei pastösen Massen, insbesondere zum Formen von Lippenstiftminen, gelöst, wobei das System eine Form, eine erste Dosiervorrichtung und eine zweite Dosiervorrichtung aufweist. Die erste Dosiervorrichtung oder zumindest ein erster Endbereich der ersten Dosiervorrichtung ist dabei angepasst zum Einbringen in die Form, wobei der in die Form eingebrachte Teil der ersten Dosiervorrichtung zumindest eine Austrittsöffnung aufweist, wobei eine erste pastöse Masse aus der zumindest einen Austrittsöffnung herausgedrückt oder gesprüht wird durch Erhöhen des Gasdruckes in zumindest dem in die Form eingebrachten Teil der ersten Dosiervorrichtung. Die zweite Dosiervorrichtung ist angepasst, die Form mit einer zweiten pastösen Masse aufzufüllen, nachdem mittels der ersten Dosiervorrichtung die erste pastöse Masse in die Form gesprüht wurde. Die erste Dosiervorrichtung kann dabei auch als Sprühvorrichtung bezeichnet werden, wohingegen die zweite Dosiervorrichtung als Gießvorrichtung bezeichnet werden kann. Die Sprühvorrichtung sprüht dabei die erste pastöse Masse auf die Innenwand der Form und die Gießvorrichtung befüllt die Form mit der zweiten pastösen Masse.

In einer bevorzugten Ausführungsform des erfindungsgemäßen Systems ist die Form aus Metall oder einem Elastomer Material geformt. Dem Fachmann ist bewusst, dass das Material der Form auf die zu verwenden pastösen Massen und den verwendeten Entformungsprozess abgestimmt werden kann.

In einer weiteren bevorzugten Ausführungsform des erfindungsgemäßen Systems weist das System Mittel zum Bewegen der Form relativ zu der ersten und/oder zweiten Dosiervorrichtung auf oder Mittel zum Bewegen der ersten und/oder zweiten Dosiervorrichtung relativ zu der Form. Mit Hilfe dieser Mittel lassen sich die Dosiervorrichtungen in die Form einbringen, um diese mit den jeweiligen pastösen Massen zu befüllen.

In einer weiteren bevorzugten Ausführungsform des Systems weist das System weiter ein Mittel zum Entformen der pastösen Massen aus der Form auf.

Weitere Vorteile und Merkmale der Erfindung sind der nachfolgenden detaillierten Beschreibung zu entnehmen, in welcher die Erfindung detaillierter und in Bezug auf die in den beigefügten Figuren dargestellten Ausführungsbeispiele beschrieben wird.

In den Figuren zeigt:
- Fig. 1: eine schematische Darstellung einer Lippenstiftmine geformt aus zwei pastösen Massen;
- Fig. 2: schematisch in sechs Schritten die Herstellung der in Fig. 1 gezeigten Lippenstiftmine; und
- Fig. 3: schematisch in zwei Schritten das Befüllen und Aufsprühen einer ersten pastösen Masse zur Herstellung der in Fig. 1 gezeigten Lippenstiftmine.

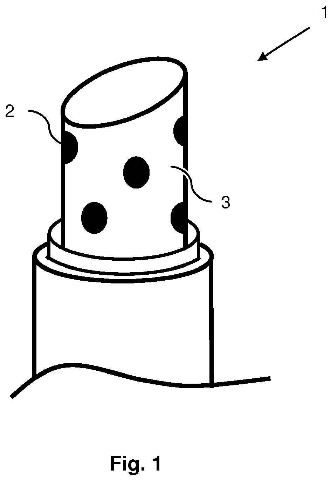

Figur 1 zeigt schematisch eine Lippenstiftmine 1, die aus zwei pastösen Massen 2 und 3 geformt ist. Die zwei pastösen Massen 2, 3 haben in dem hier gezeigten Ausführungsbeispiel unterschiedliche Farben. Die erste pastöse Masse 2 ist in dem hier gezeigten Ausführungsbeispiel dunkel dargestellt und hat dabei die Form von Punkten und ist als Blickfang eingesetzt im Kontrast zur zweiten pastösen Masse 3, die eine hellere Farbe hat und die als Basismasse der Lippenstiftmine 1 eingesetzt ist. Der Fachmann wird verstehen, dass das hier gezeigte Ausführungsbeispiel der zumindest zwei pastösen Massen 2, 3 und deren Form und Verteilung nur exemplarisch zu verstehen ist und die Erfindung auch andere Ausgestaltungen und Muster umfasst.

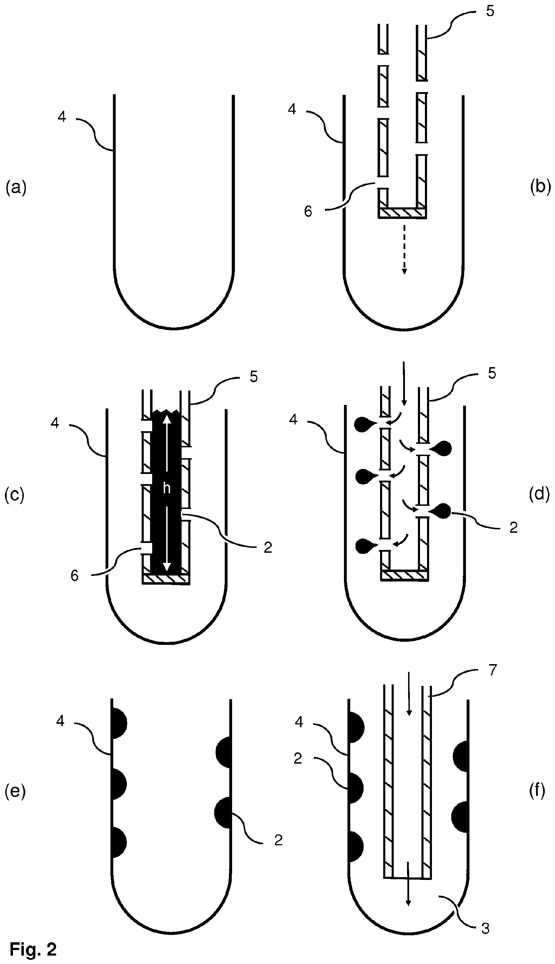

Figur 2 zeigt schematisch in sechs Schritten die erfindungsgemäße Herstellung der in Figur 1 gezeigten Lippenstiftmine 1. Hierbei ist in Figur 2 (a) die Form 4 dargestellt, die zum Formen der Lippenstiftmine 1 verwendet werden kann. Die Form 4 kann aus Metall oder einem Elastomer geformt sein. Vor dem Befüllen der Form 4 kann diese zunächst vortemperiert werden. Dieses Aufheizen der Form 4 vor dem Befüllen verhindert, dass beim Befüllen der Form 4 die pastösen Massen 2, 3 nicht gleich Erstarren, um so eine glattere Oberfläche zu schaffen und ein kontrolliertes Erstarren zu gewährleisten. Des Weiteren fördert das Aufheizen die Anhaftung der pastösen Massen 2 an der Innenwand der Form 4. Die Form 4 kann beispielsweise auf eine Temperatur von 20°C bis 50°C aufgeheizt werden, bevorzugt wird die Form auf Raumtemperatur aufgeheizt, wenn die Form aus einem Elastomer geformt ist und auf 35°C wenn die Form aus Metall geformt ist. Anschließend wird wie in Figur 2 (b) dargestellt, eine Dosiervorrichtung 5 - hier ist nur ein erster Endbereich der Dosiervorrichtung 5 dargestellt - in die Form 4 eingebracht. Das Aufheizen der Form 4 kann vor und/oder während des Einbringens der Dosiervorrichtung 5 geschehen. Die Dosiervorrichtung 5 wird kontaktlos in die Form 4 eingebracht. D.h. die Dosiervorrichtung 5 hat keinen Kontakt mit der Innenwandung der Form 4. Es ergibt sich dementsprechend ein Spaltmaß zwischen der Innenwand der Form 4 und der Dosiervorrichtung 5. Die Größe dieses Spaltmaßes ist abhängig davon, wie groß der Innendurchmesser der Form 4 im Vergleich zum Außendurchmesser der Dosiervorrichtung 5 ist. Damit die Dosiervorrichtung 5 kontaktlos in die Form 4 eingebracht werden kann, muss der Innendurchmesser der Form 4 größer sein als der Außendurchmesser der Dosiervorrichtung 5. Das Spaltmaß beträgt bevorzugt 0,5 mm bis 4,0 mm. Dem Fachmann ist aber bewusst, dass auch andere Spaltmaße gewählt werden können. Die Dosiervorrichtung 5 weist des Weiteren in dem hier gezeigten Ausführungsbeispiel eine Vielzahl von Austrittsöffnungen 6 auf, die auch Sprühöffnungen genannt werden können. Aus diesen Austrittsöffnungen 6 wird, wie in den weiteren Schritten gezeigt, die erste pastöse Masse auf die Innenwandung der Form 4 aufgesprüht. Die Anordnung der Austrittsöffnungen 6 ergibt dabei das spätere Muster der ersten pastösen Masse 2 auf der Innenwand der Form 4. Das Spaltmaß bestimmt die Größenübersetzung zwischen dem Muster auf der Dosiervorrichtung 5 und dem aufgesprühten Muster auf der Innenwand der Form 4. Je größer das Spaltmaß desto größer die Größenübersetzung.

Die pastöse Masse 2 wird vor dem Befüllen in die Dosiervorrichtung 5 auf eine Temperatur erhitzt, die oberhalb des Schmelzpunktes aller darin gebundener Wachse liegt. Gerade bei pastösen Massen 2 für Lippenstifte ist dies notwendig, um in der späteren Lippenstiftmine eine ausreichende Kristallisation und damit ausreichende Härte zu erreichen. Die Vorheiztemperatur liegt dabei deutlich über dem Tropfpunkt, beispielsweise 50°C, der pastösen Masse 2 und ist massenspezifisch. Beispielsweise liegt die Aufheiztemperatur bei 80°C.

Die Dosiervorrichtung 5 wird während und/oder vor dem Einbringen in die Form 4 aufgeheizt, dies kann durch eine Wärmestation vor dem Einbringen geschehen oder durch Heizmittel während des Einbringens. Die Dosiervorrichtung 5 wird dabei vorzugsweise auf eine Temperatur aufgeheizt, die unterhalb des Tropfpunktes der einzufüllenden pastösen Masse 2 liegt. Die Temperatur der Dosiervorrichtung 5 bestimmt neben der Zusammensetzung der pastösen Masse 2 weitestgehend die Viskosität der pastösen Masse 2. Bevorzugt wird die Dosiervorrichtung 5 auf eine Temperatur von 47°C aufgeheizt. Gewählt werden kann aber beispielsweise ein Bereich von Raumtemperatur bis 50°C. Dem Fachmann ist aber bewusst, dass auch andere Temperaturen gewählt werden können. Es ist nur darauf zu achten, dass die gewählte Temperatur derart ist, dass die pastöse Masse 2 eine Viskosität aufweist, dass diese nicht selbstständig aus den Austrittsöffnungen 6 der Dosiervorrichtung 5 austritt. Hierzu sind auch die Austrittsöffnungen 6 passend zur Viskosität zu wählen. Für niederviskose pastöse Massen 2 sind kleinere Austrittsöffnungen 6 zu wählen als für höher viskose pastöse Massen 2. Der Öffnungsdurchmesser kann im Bereich von 0,1 mm bis 5 mm liegen, bevorzugt wird hier ein Öffnungsdurchmesser von 0,5 mm gewählt. Dem Fachmann ist aber bewusst, das auch andere Öffnungsdurchmesser gewählt werden können und diese in Abstimmung mit der Viskosität gewählt werden können.

In Figur 2 (c) ist die Dosiervorrichtung 5 gezeigt, die in die Form 4 eingebracht ist und in die die pastöse Masse 2 eingefüllt ist. Die pastöse Masse 2 weist dabei eine Viskosität auf, dass diese nicht selbstständig aus den Austrittsöffnungen 6 austritt. Diese Viskosität ist über die Temperatur der Dosiervorrichtung 5, wie oben beschrieben zu regeln. Die Füllhöhe h der pastösen Masse 2 in der Dosiervorrichtung 5 ergibt ein bestimmtes Volumen, also eine bestimmte Menge der pastösen Masse 2. Die Füllhöhe h bestimmt dementsprechend wie viel der pastösen Masse 2 dosiert wird. Dabei kann die Dosiervorrichtung 5 entweder einen Füllstandssensor aufweisen, der die zu dosierende Menge an der pastösen Masse 2 bestimmt, oder nur eine bestimmte Menge an der zu dosierenden pastösen Masse 2 wird in die Dosiervorrichtung 5 eingebracht, wobei die Menge zuvor durch andere Mittel bestimmt wurde. Dem Fachmann sind eine Vielzahl von Möglichkeiten bekannt, wie eine bestimmte Menge an einer pastösen Masse 2 bestimmt werden kann und in die Dosiervorrichtung 5 abgefüllt werden kann. In dem hier gezeigten Ausführungsbeispiel ist die Dosiervorrichtung 5 beziehungsweise zumindest der in die Form eingebrachte Teil der Dosiervorrichtung 5 röhrenförmig und hat einen über eine bestimmte Höhe gleichen Innendurchmesser, beispielsweise von 2,5 mm, bei einer bestimmten Füllhöhe h ist also ein bestimmtes Volumen, d.h. eine bestimmte Menge an pastösen Masse 2 in der Dosiervorrichtung 5 enthalten. Sollen andere Mengen der pastösen Masse 2 in die Form 4 eingebracht werden, so können Dosiervorrichtungen 5 mit anderen Innendurchmessern oder andere Geometrien verwendet werden. Es ist auch denkbar, das in die Dosiervorrichtung 5 Einsätze eingebracht werden können, die das für die Dosierung zur Verfügung stehende Volumen begrenzen. Bevorzugt werden in die Dosiervorrichtung 50,2 ml an pastöser Masse 2 eingefüllt. Hier können aber auch Mengen im Bereich zwischen 0,5 bis 5 ml gewählt werden. Dem Fachmann ist aber bewusst, dass auch andere Mengen vorgesehen sein können.

Wenn die Dosiervorrichtung 5 mit der zu dosierenden Menge an der pastösen Masse 2 befüllt ist, in der Dosiervorrichtung 5 also eine bestimmte Füllhöhe *h* erreicht ist, wird in der Dosiervorrichtung 5 ein Gasimpuls, beispielsweise ein Druckliftimpuls, auf die sich in der Dosiervorrichtung 5 befindliche pastöse Masse 2 ausgeübt. Dieser Gasimpuls kann durch anschließen der Dosiervorrichtung 5 an eine Gasdruckquelle ausgeübt werden. Alternativ oder zusätzlich kann sich innerhalb der Dosiervorrichtung - hier nicht gezeigt - auch ein Stempel bewegen, der schlagartig den Raum oberhalb der Füllhöhe *h* der pastösen Masse 2 verkleinert, so dass der Impuls des Stempels von der Luft auf die pastöse Masse 2 übertragen wird. Auch wenn hier von Druckluft gesprochen wird, ist dem Fachmann bewusst, dass auch andere Gase hiervon umfasst sein sollen und jede Erhöhung des Gasdruckes oberhalb der Füllhöhe *h* der pastösen Masse als Gasdruckimpuls angesehen wird. Dabei ist dem Fachmann bewusst, dass diese Gasdruckerhöhung durch jede beliebige Reaktion oder Aktion hervorgerufen werden kann, die zur Erhöhung des Gasdruckes führt.

Figur 2 (d) zeigt dass bei Erhöhung des Gasdruckes in der Dosiervorrichtung 5, die sich in der Dosiervorrichtung 5 befindliche pastöse Masse 2 aus den Austrittsöffnungen 6 herausgedrückt beziehungsweise gesprüht wird und anschließend auf die Innenwand der Form 4 auftrifft. Die Länge der Erhöhung des Gasdruckes, d.h. die Länge bzw. Dauer des Druckimpulses ist dabei abhängig von der Menge an pastöser Masse 2 und dem gewünschten Sprühverhalten. Die Dauer sollte aber derart gewählt werden, dass zumindest ein wesentlicher Anteil der sich in der Dosiervorrichtung 5 befindlichen pastösen Masse 2 aus den Austrittsöffnungen 6 gedrückt beziehungsweise gesprüht wird, so dass keine pastöse Masse 2 in den Austrittsöffnungen 6 verbleibt. Bevorzugt ist die Dauer eines Druckluftimpulses ca. 0,2 Sekunden.

Die Anordnung der Austrittsöffnungen 6 sowie deren Abstand von der Innenwand der Form 4 bestimmt dabei das Muster der pastösen Masse 2. Dabei hängt das Sprühverhalten der pastösen Masse 2 auch stark von der Viskosität der pastösen Masse 2 ab. Bei einer niedrigen Viskosität kommt es zu einer Verneblung der pastösen Masse 2, wodurch sich Sprühstrukturen auf die Innenwand der Form 4 aufbringen lassen, beispielsweise um einen Glittereffekt zu erzeugen. Bei höherer Viskosität der pastösen Masse 2 kommt es hingegen zu einem satten Auftrag, wodurch scharfe Kontierungen möglich sind. Die Viskosität der pastösen Masse 2 lässt sich dabei durch die Zusammensetzung der pastösen Masse 2 sowie der Temperierung der Dosiervorrichtung 5 regulieren und kann auf das gewünschte Ergebnis abgestimmt werden. In dem hier gezeigten Ausführungsbeispiel ist die Viskosität der pastösen Masse 2 derart gewählt, dass sich scharfe Konturen ergeben. Das Sprühverhalten ist auch von der Erhöhung des Gasdruckes abhängig, je höher der Gasdruck, desto stärker die Vernebelung. Bevorzugt wird eine Stärke von 2,0 bar eingesetzt. Dem Fachmann ist aber bewusst, dass auch andere Drücke eingesetzt werden können. Beispielsweise können Drücke bis 6 bar eingesetzt werden. Die Limitierung ergibt sich hier aber einzig und allein durch das Material der Dosiervorrichtung 5 und welches Sprühverhalten gewünscht ist. Der Fachmann wird erkennen, dass sich das Sprühverhalten entsprechend des gewünschten Endergebnisses durch die Viskosität und den eingesetzten Druck regulieren lassen und sich somit über diese Stellgrößen ein gewünschtes Sprühverhalten erzielen lässt.

Das sich durch das Aufsprühen der pastösen Masse 2 ergebene Muster kann dabei nicht nur durch die Anordnung der Austrittsöffnungen 6 in der Dosiervorrichtung 5 vorgegeben sein, sondern kann sich auch durch ein Bewegen der Dosiervorrichtung 5 innerhalb der Form 4 ergeben. Beispielsweise kann die Dosiervorrichtung 5 innerhalb der Form 4 gedreht werden, wodurch dich langgezogene Strukturen an der Innenwand der Form 4 in horizontaler Ausrichtung ergeben. Alternativ oder zusätzlich kann die Dosiervorrichtung 5 auch hoch oder runter bewegt werden, um so vertikale langgezogene Strukturen zu erzielen.

In dem hier gezeigten Ausführungsbeispiel verharrt die Dosiervorrichtung 5 aber in einer Position in Relation zur Form 4, so dass sich in dem hier gezeigten Ausführungsbeispiel punktförmige Strukturen auf der Innenwand der Form 4 ergeben. Diese punktförmigen Strukturen sind in Figur 2 (e) gezeigt, wobei die Dosiervorrichtung 5 in dieser Figur bereits wieder aus der Form 4 entfernt wurde. Die in diesem Ausführungsbeispiel sich ergebenen Strukturen aus pastöser Masse 2 ergeben sich dadurch, dass die aufgesprühte pastöse Masse 2 beim Auftreffen auf die Innenwand der Form 4 direkt erstarrt und an dem Auftreffpunkt verharrt.

Um weitere Strukturen zu erzeugen ist auch denkbar, dass die Dosiervorrichtung 5 in der Form 4 verbleibt und mit einer weiteren pastösen Masse befüllt wird und durch eine weitere Erhöhung des Gasdruckes weitere Strukturen aufgesprüht werden. Es ist auch denkbar, dass eine weitere Dosiervorrichtung 5 in die Form 4 eingebracht wird, wobei diese weitere Dosiervorrichtung 5 anders angeordnete Austrittsöffnungen 6 hat, um weitere Strukturen aufzusprühen. In dem hier gezeigten Ausführungsbeispiel wird mit der Dosiervorrichtung 5 aber nur eine pastöse Masse 2 aufgesprüht. Es sollte vom Fachmann verstanden werden, dass das hier gezeigte Ausführungsbeispiel und die sich ergebene Struktur und deren Anordnung rein exemplarisch gedacht sind und auch andere Strukturen, Muster, Anordnungen von der Erfindung umfasst sind.

Figur 2 (f) zeigt die Form 4 mit der auf die Innenwand gesprühten pastösen Masse 2 sowie eine in die Form 4 eingebrachte zweite Dosiervorrichtung 7 zum Auffüllen der Form 4 mit einer zweiten pastösen Masse 3. Dabei wird beim Auffüllen der Form 4 die zweite Dosiervorrichtung 7 aus der Form 7 bewegt. Dem Fachmann sind aber auch noch andere Vorrichtungen zum Auffüllen der Form 4 bekannt. Beispielsweise kann die Form 4 auch rein durch eine Gießfüllung aufgefüllt werden. Wird eine zweite Dosiervorrichtung 7 in die Form 4 eingebracht zum Auffüllen der Form 4 mit einer zweiten pastösen Masse 3, ist nur darauf zu achten, dass diese kontaktfrei zu der bereits aufgesprühten Struktur eingebracht wird, so dass die aufgesprühte Struktur nicht zerstört wird.

Nach dem Auffüllen der Form 4 mit der zweiten pastösen Masse 3 kann die Form abgekühlt werden, beispielsweise auf o°C für etwa 5 Minuten, so dass die pastösen Massen erstarren können und die erzeugte Lippenstiftmine 1 mit Hilfe einer Entformstation aus der Form 4 entnommen werden kann.

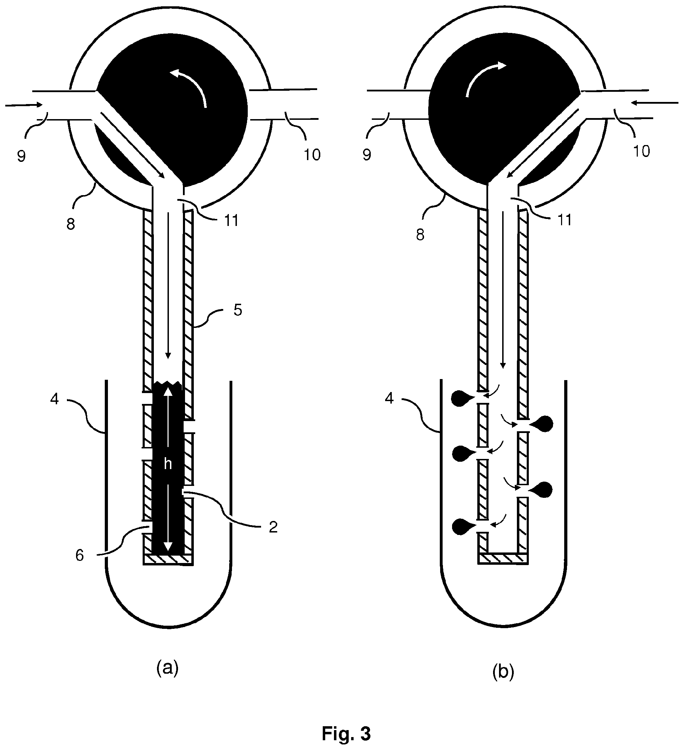

Figur 3 (a) zeigt schematisch das Befüllen der Dosiervorrichtung 5 eingebracht in der Form 4 mit der pastösen Masse 2. Die Dosiervorrichtung 5 weist dabei einen ersten Endbereich auf, an dem sich die Vielzahl von Austrittsöffnungen 6 befinden und der in die Form 4 eingebracht werden kann. An einem dem ersten Endbereich gegenüberliegenden zweiten Endbereich der Dosiervorrichtung 5 befindet sich in dem hier gezeigten Ausführungsbeispiel ein Drehventil 8. Das Drehventil 8 weist einen ersten Eingang 9 auf, der mit einer Zuführung der pastösen Masse 2 verbunden werden kann. Der Ausgang 11 des Drehventils 8 ist mit dem ersten Endbereich der Dosiervorrichtung 5 verbunden. Das Drehventil 8 stellt in der in Figur 3 (a) gezeigten ersten Stellung eine Verbindung zwischen dem ersten Eingang 9 und dem Ausgang 11 her, so dass die pastöse Masse 2, die dem ersten Eingang 9 zugeführt werden kann, in den ersten Endbereich der Dosiervorrichtung 5 gelangen kann. Dabei kann der erste Eingang 9 mit dem Ausgang 11 so lange verbunden sein, bis eine genügende Menge an pastöser Masse 2 in den ersten Endbereich der Dosiervorrichtung 5 gefüllt worden ist. Die pastöse Masse 2 in dem ersten Endbereich der Dosiervorrichtung 5 also eine bestimmte Füllhöhe *h* erreicht hat. Anschließend kann das Drehventil 8 von der in Figur 3 (a) gezeigten ersten Stellung in eine zweite Stellung überführt werden, in dem hier gezeigten Ausführungsbeispiel beispielsweise durch Drehen des Drehventils 8, so dass eine Verbindung zwischen einem zweiten Eingang 10 und dem Ausgang 11 geschaffen wird. Dies ist in Figur 3 (b) gezeigt.

Figur 3 (b) zeigt das Drehventil 8 in der zweiten Stellung, in der eine Verbindung zwischen dem zweiten Eingang 10 und dem Ausgang 11 hergestellt ist. Der zweite Eingang 10 ist in dem hier gezeigten Ausführungsbeispiel mit einer Gasdruckquelle verbunden, die es erlaubt den Gasdruck im ersten Endbereich der Dosiervorrichtung 5 zu erhöhen, so dass die pastöse Masse 2, die sich im ersten Endbereich der Dosiervorrichtung befindet aus den Austrittsöffnungen 6 der Dosiervorrichtung herausgedrückt beziehungsweise gesprüht wird. Die Dauer des Gasdruckimpulses kann dabei dadurch gesteuert werden, wie lange das Drehventil 8 in der zweiten Stellung verharrt. Sobald das Drehventil 8 wieder aus der zweiten Stellung bewegt wird, beispielsweise durch Drehen des Drehventils 8 zurück in die erste Stellung, wird die Verbindung zwischen dem zweiten Eingang 10 und dem Ausgang 11 unterbrochen. In der in Figur 3 (b) gezeigten zweiten Stellung des Drehventils 8 ist der erste Eingang 9 des Drehventils 8 verschlossen, so dass keine weitere pastöse Masse 2 in den ersten Endbereich der Dosiervorrichtung 5 gelangen kann. Andersherum ist in der ersten Stellung des Drehventils, wie in Figur 3 (b) dargestellt, der zweite Eingang 10 verschlossen, so dass es zu keiner Erhöhung des Gasdruckes in dem ersten Endbereich der Dosiervorrichtung 5 kommen kann.

Das Drehventil 8 ermöglicht einen reibungslosen Herstellungsprozess, da das Drehventil 8 von der ersten Stellung zur Befüllung des ersten Endbereichs der Dosiervorrichtung 5 in die zweite Stellung zur Erhöhung des Gasdruckes übergeführt werden kann. Dabei kann der Wechsel zwischen Befüllen und Erhöhung des Gasdruckes durch die Drehgeschwindigkeit des Drehventils 8 gesteuert werden und dem Herstellungsprozess angepasst werden.

## Patentansprüche

1. Ein Verfahren zum Befüllen einer Form (4) mit zumindest zwei pastösen Massen (2, 3), wobei die Form (4) insbesondere angepasst ist zum Formen von Lippenstiftminen (1), das Verfahren aufweisend:
Einbringen eines ersten Endbereichs einer Dosiervorrichtung (5) in die Form (4), wobei der erste Endbereich der Dosiervorrichtung (5) zumindest eine Austrittsöffnung (6) aufweist;
Befüllen des ersten Endbereichs der Dosiervorrichtung (5) mit einer ersten pastösen Masse (2);
Erhöhen des Gasdruckes in dem ersten Endbereich der Dosiervorrichtung (5), wobei die erste pastöse Masse (2) durch den Druck aus der zumindest einen Austrittsöffnung (6) herausgedrückt wird;
Entfernen des ersten Endbereichs der Dosiervorrichtung (5) aus der Form (4); und
Auffüllen der Form (4) mit einer zweiten pastösen Masse (3).

2. Das Verfahren nach Anspruch 1, weiter aufweisend:
Aufheizen der Form (4) vor und/oder während des Einbringens des ersten Endbereichs der Dosiervorrichtung (5).

3. Das Verfahren nach einem der vorherigen Ansprüche, weiter aufweisend:
Aufheizen der ersten pastösen Masse (2) vor und/oder während des Befüllens des ersten Endbereichs der Dosiervorrichtung (5).

4. Das Verfahren nach einem der vorherigen Ansprüche, wobei das Einbringen des ersten Endbereichs der Dosiervorrichtung (5) in die Form (4) kontaktlos geschieht.

5. Das Verfahren nach einem der vorherigen Ansprüche, weiter aufweisend:
Befüllen des ersten Endbereichs der Dosiervorrichtung (5) mit einer weiteren pastösen Masse, und
Erhöhen des Gasdruckes in dem ersten Endbereich der Dosiervorrichtung (5), bevor die Form (4) mit der zweiten pastösen Masse (3) aufgefüllt wird.

6. Das Verfahren nach einem der vorherigen Ansprüche, weiter aufweisend:
Bewegen des ersten Endbereichs der Dosiervorrichtung (5) in der Form (4) während der Erhöhung des Gasdruckes.

7. Das Verfahren nach einem der vorherigen Ansprüche, weiter aufweisend:
Abkühlen der Form (4) nach dem Befüllen der Form (4) mit der zweiten pastösen Masse (3).

8. Eine Dosiervorrichtung (5) zum Befüllen einer Form (4) mit einer pastösen Masse (2), insbesondere einer Form (4) zum Formen von Lippenstiftminen, die Dosiervorrichtung (5) aufweisend:
einen ersten Endbereich mit zumindest einer Austrittsöffnung (6), wobei der erste Endbereich angepasst ist zumindest teilweise in die Form (4) eingebracht zu werden; und
einen zweiten Endbereich mit einem Mittel zur selektiven Zuführung (8) einer pastösen Masse (2) und zum Erhöhen des Gasdruckes in dem ersten Endbereich der Dosiervorrichtung (5).

9. Die Dosiervorrichtung (5) nach Anspruch 8, wobei der Außendurchmesser des ersten Endbereichs kleiner ist als der Innendurchmesser der Form (4).

10. Die Dosiervorrichtung (5) nach einem der Ansprüche 8 und 9, wobei das Mittel zur selektiven Zuführung (8) in einer ersten Stellung die pastöse Masse (2) dem ersten Endbereich der Dosiervorrichtung (5) zuführt und in einer zweiten Stellung den Gasdruck erhöht.

11. Die Dosiervorrichtung (5) nach Anspruch 10, wobei das Mittel zur selektiven Zuführung (8) ein Ventil ist, wobei
ein erster Eingang (9) des Ventils mit einer Zuführung für die pastöse Masse (2),
ein zweiter Eingang (10) des Ventils mit einer Zuführung für eine Gasdruckquelle, und
ein Ausgang (11) des Ventils mit dem ersten Endbereich der Dosiervorrichtung (5) verbunden ist.

12. Ein System zum Formen von zumindest zwei pastösen Massen (2, 3), insbesondere zum Formen von Lippenstiftminen, dass System aufweisend:
eine Form (4);
eine erste Dosiervorrichtung (5) mit einem ersten Endbereich angepasst zum Einbringen in die Form (4), wobei der erste Endbereich der Dosiervorrichtung (5) zumindest eine Austrittsöffnung (6) aufweist, wobei eine erste pastöse Masse (2) aus der zumindest einen Austrittsöffnung (6) herausgedrückt wird durch Erhöhen des Gasdruckes in dem ersten Endbereich der Dosiervorrichtung (5); und
eine zweite Dosiervorrichtung (7) angepasst zum Auffüllen der Form (4) mit einer zweiten pastösen Masse (3).

13. Das System nach Anspruch 12, wobei die Form (4) aus Metall oder einem Elastomer Material geformt ist.

14. Das System nach einem der Ansprüche 12 und 13, wobei das System weiter aufweist:
Mittel zum Bewegen der Form (4) relativ zu der ersten und/oder zweiten Dosiervorrichtung (5, 7); oder
Mittel zum Bewegen der ersten und/oder zweiten Dosiervorrichtung (5, 7) relativ zu der Form (4).

15. Das System nach einem der Ansprüche 12 bis 14, wobei das System weiter aufweist:
ein Mittel zum Entformen der pastösen Massen (2, 3) aus der Form (4).

## Claims

1. A method for filling of a mold (4) with at least two pasty masses (2, 3), wherein the mold (4) is in particular adapted for forming lipstick mines (1), the method comprising:
inserting of a first end region of a dosing apparatus (5) into the mold (4), wherein the first end region of the dosing apparatus (5) comprises at least one opening (6);
filling the first end region of the dosing apparatus (5) with a first pasty mass (2);
increasing the gas pressure in the first end region of the dosing apparatus (5), wherein the first pasty mass (2) is pressed through the at least one opening (6) by the pressure;
removing the first end region of the dosing apparatus (5) from the mold (4); and
filling up the mold (4) with a second pasty mass (3).

2. The method of claim 1, further comprising:
heating the mold (4) before and / or during the inserting of the first end region of the dosing apparatus (5).

3. The method of any of the preceding claims, further comprising:
heating the first pasty mass (2) before and / or during the filling the first end region of the dosing apparatus (5).

4. The method of any of the preceding claims, wherein the inserting the first end region of the dosing apparatus (5) into the mold (4) takes place contactless.

5. The method of any of the preceding claims, further comprising:
filling the first end region of the dosing apparatus (5) with a further pasty mass, and
increasing the gas pressure in the first end region of the dosing apparatus (5) before the mold (4) is filled up with the second pasty mass (3).

6. The method of any of the preceding claims, further comprising:
moving the first end region of the dosing apparatus (5) into the mold (4) during the increasing of the gas pressure.

7. The method of any of the preceding claims, further comprising:
Cooling of the mold (4) after the filling of the mold (4) with the second pasty mass (3).

8. A dosing apparatus (5) for filling of a mold (4) with a pasty mass (2), in particular a mold (4) for forming of lipstick mines, the dosing apparatus (5) comprising:
a first end region with at least one opening (6), wherein the first end region is adapted to be inserted at least partially into the mold (4); and
a second end region with a means for selectively feeding (8) a pasty mass (2) and for increasing the gas pressure in the first end region of the dosing apparatus (5).

9. The dosing apparatus (5) of claim 8, wherein the outer diameter of the first end region is smaller than the inner diameter of the mold (4).

10. The dosing apparatus (5) of any of the claims 8 or 9, wherein the means for selectively feeding (8), in a first position, feeds the pasty mass (2) to the first end region of the dosing apparatus (5) and, in a second position, increases the gas pressure.

11. The dosing apparatus (5) of claim 10, wherein the means for selectively feeding (8) is a valve, wherein
a first input (9) of the valve is linked with a feeding for the pasty mass (2),
a second input (10) of the valve is linked with a feeding for the source of the gas pressure, and
an output (11) of the valve is linked with the first end region of the dosing apparatus (5).

12. A system for forming of at least two pasty masses (2, 3), in particular for forming of lipstick mines, the system comprising:
a mold (4);
a first dosing apparatus (5) with a first end region adapted for inserting into the mold (4), wherein the first end region of the dosing apparatus (5) comprises at least one opening (6), wherein the first pasty mass (2) is pressed through the at least one opening (6) by increasing the gas pressure in the first end region of the dosing apparatus (5); and
a second dosing apparatus (7) adapted for filling up the mold (4) with a second pasty mass (3).

13. The system of claim 12, wherein the mold (4) is formed from metal or an elastomeric material.

14. The system of any of the claims 12 and 13, wherein the system further comprises:
means for moving the mold (4) relatively to the first and / or the second dosing apparatus (5, 7); or
means for moving the first and / or the second dosing apparatus (5, 7) relatively to the mold (4).

15. The system of any of the claims 12 to 14, wherein the system further comprises:
a means for de-forming the pasty masses (2, 3) from the mold (4).

## Revendications

1. Un procédé pour remplir un moule (4) avec au moins deux matières pâteuses (2, 3), le moule (4) étant en particulier apte à mouler des raisins de bâtons à lèvres (1), le procédé consistant à :
introduire une première zone extrême d'un dispositif de dosage (5) dans le moule (4), la première zone extrême du dispositif de dosage (5) comportant au moins une ouverture de sortie (6) ;
remplir la première zone extrême du dispositif de dosage (5) avec une première matière pâteuse (2) ;
augmenter la pression gazeuse dans la première zone extrême du dispositif de dosage (5), la première matière pâteuse (2) étant expulsée de la au moins une ouverture de sortie (6) par la pression ;
retirer du moule (4) la première zone extrême du dispositif de dosage (5) ;
et
remplir le moule (4) avec une seconde matière pâteuse (3).

2. Le procédé selon la revendication 1, consistant en outre à :
chauffer le moule (4) avant et/ou pendant l'introduction de la première zone extrême du dispositif de dosage (5).

3. Le procédé selon une des revendications précédentes, consistant en outre à :
chauffer la première matière pâteuse (2) avant et/ou pendant le remplissage de la première zone extrême du dispositif de dosage (5).

4. Le procédé selon une des revendications précédentes, l'introduction de la première zone extrême du dispositif de dosage (5) dans le moule (4) s'effectuant sans contact.

5. Le procédé selon une des revendications précédentes, consistant en outre à :
remplir la première zone extrême du dispositif de dosage (5) avec une autre matière pâteuse, et à augmenter la pression gazeuse dans la première zone extrême du dispositif de dosage (5) avant que le moule (4) ne soit rempli avec la seconde matière pâteuse (3).

6. Le procédé selon une des revendications précédentes, consistant en outre à :
déplacer la première zone extrême du dispositif de dosage (5) dans le moule (4) pendant l'augmentation de la pression gazeuse.

7. Le procédé selon une des revendications précédentes, consistant en outre à :
refroidir le moule (4) après le remplissage du moule (4) avec la seconde matière pâteuse (3).

8. Un dispositif de dosage (5) pour remplir un moule (4) avec une matière pâteuse (2), en particulier un moule (4) pour mouler des raisins de bâtons à lèvres, le dispositif de dosage (5) comprenant :
une première zone extrême avec au moins une ouverture de sortie (6), la première zone extrême étant apte à être introduite au moins partiellement dans le moule (4) ; et
une seconde zone extrême avec un moyen d'amenée sélective (8) d'une matière pâteuse (2) et d'augmentation de la pression gazeuse dans la première zone extrême du dispositif de dosage (5).

9. Le dispositif de dosage (5) selon la revendication 8, le diamètre extérieur de la première zone extrême étant inférieur au diamètre intérieur du moule (4).

10. Le dispositif de dosage (5) selon une des revendications 8 et 9, le moyen d'amenée sélective (8) amenant, dans une première position, la matière pâteuse (2) à la première zone extrême du dispositif de dosage (5) et, dans une seconde position, augmentant la pression gazeuse.

11. Le dispositif de dosage (5) selon la revendication 10, le moyen d'amenée sélective (8) étant une valve,
une première entrée (9) de la valve étant reliée à une amenée de matière pâteuse (2),
une seconde entrée (10) de la valve étant reliée à une amenée d'une source de pression gazeuse, et
une sortie (11) de la valve étant reliée à une première zone extrême du dispositif de dosage (5).

12. Un système de moulage d'au moins deux matières pâteuses (2, 3), en particulier de moulage de raisins de bâtons à lèvres, le système comprenant :
un moule (4) ;
un premier dispositif de dosage (5) avec une première zone extrême apte à être introduite dans le moule (4), la première zone extrême du dispositif de dosage (5) comportant au moins une ouverture de sortie (6), une première matière pâteuse (2) étant expulsée de la au moins une ouverture de sortie (6) par une augmentation de la pression gazeuse dans la première zone extrême du dispositif de dosage (5) ;
et
un second dispositif de dosage (7) apte à remplir le moule (4) avec une seconde matière pâteuse (3).

13. Le système selon la revendication 12, le moule (4) étant formé de métal ou d'un matériau élastomère.

14. Le système selon une des revendications 12 et 13, le système comportant en outre :
des moyens pour déplacer le moule (4) par rapport au premier et/ou au second dispositif de dosage (5, 7) ; ou
des moyens pour déplacer le premier et/ou le second dispositif de dosage (5, 7) par rapport au moule (4).

15. Le système selon une des revendications 12 à 14, le système comprenant en outre :
un moyen pour démouler les matières pâteuses (2, 3) du moule (4).
